# EUROPÄISCHE PATENTSCHRIFT

(11) **EP 0 468 328 B1**
(45) Veröffentlichungstag und Bekanntmachung des Hinweises auf die Patenterteilung: **20.03.1996**
(21) Anmeldenummer: 91111740.6
(22) Anmeldetag: 15.07.1991
(51) Int. Cl.: G02B 5/10, B23K 26/06

(54) **Spiegel zur Veränderung der geometrischen Gestalt eines Lichtbündels**
Mirror for altering the geometric shape of a light beam
Miroir pour changer la forme géométrique d'un faisceau lumineux

(30) Priorität: 27.07.1990 DE 4023904
(43) Veröffentlichungstag der Anmeldung: 29.01.1992
(73) Patentinhaber: Firma Carl Zeiss, D-73446 Oberkochen (DE); CARL ZEISS-STIFTUNG HANDELND ALS CARL ZEISS, D-89518 Heidenheim (Brenz) (DE)
(72) Erfinder: Hohberg, Gerhard, Dr., W-7080 Aalen-Dewangen (DE)

(56) Entgegenhaltungen:
- EP-A- 0 395 910
- FR-A- 2 525 733
- US-A- 4 518 232
- PATENT ABSTRACTS OF JAPAN Band 8, Nr. 286 (P-324), 27. Dezember 1984; & JP-A-59151101
- APPLIED OPTICS Band 19, Nr. 20, 1980, Seiten 3554-3561, New York, US; B. AUTHIER et al.: "High concentration solar collector of the stepped spherical type: optical design characteristics"
- OPTICAL ENGINEERING Band 27, Nr. 11,1988, Seiten 999-1007; Bellingham, WA,US; F.M. DICKEY et al.: "Multifaceted laser beam integrators: general formulation and design concepts"
- NAVY TECHNICAL DISCLOSURE BULLETIN Band 10, Nr. 4, 1985, Seiten 25-32, Arlington, Virginia, US; B.H. RIPIN: "Induced spatial incoherence optical delay element"

## Beschreibung

Die Erfindung betrifft einen Spiegel zur Veränderung der geometrischen Gestalt eines Lichtbündels gemäß dem Oberbegriff des Anspruches 1 sowie ein Verfahren zur Nutzung des Spiegels.

Spiegel zur Veränderung der geometrischen Gestalt eines Lichtbündels sind weit verbreitet. Schwierig ist die Erzeugung eines Strahlungsquerschnittes, welcher einen im wesentlichen linienförmigen bis rechteckigen Querschnitt aufweist, innerhalb dessen die Intensität einen vorbestimmten Verlauf hat, insbesondere in Längsrichtung konstant ist. Solche Strahlungsquerschnitte werden insbesondere zur Oberflächenbehandlung mit Lasern benötigt, um nur ein wesentliches Anwendungsgebiet zu nennen.

In der DE 39 12 237 und EP-A 0 392 387 (Zitiert nach Art. 54(3) EPÜ) ist ein derartiger Spiegel beschrieben.

Die umformende Optik sorgt dafür, daß der Laserstrahl beim Auftreffen auf das Werkstück einen im wesentlichen rechteckigen bis linienförmigen Querschnitt aufweist, innerhalb dessen die Intensität einen fast konstanten Wert hat. Wird ein Strahl mit derartigem Querschnitt mit konstanter Geschwindigkeit und parallel zu einem Kantenpaar des Rechtecks über die Werkstückoberfläche geführt, dann ist das Energieprofil innerhalb des bestrahlten Streifens gleichförmig.

Die meisten in der Praxis verwendeten Laser liefern einen Strahl, dessen Querschnitt nicht rechteckig und dessen Intensitätsverteilung nicht gleichförmig ist. Deshalb werden optische Anordnungen gebraucht, die einen beliebigen Strahlquerschnitt geeignet umformen können. Facettenspiegel und Integratoren sind zwei Typen von umformenden Optiken, welche für die Erzeugung von linienhaften Geometrien hinsichtlich der Intensitätsverteilung von Laserstrahlen bevorzugt eingesetzt werden.

In der JP 63-77178 A ist ein Facettenspiegel aus einer Vielzahl von Planspiegeln, die mosaikartig tangential an einer Paraboloidfläche anliegend angeordnet sind und ein Laserbündel auf ein Rechteck mit im wesentlichen der Ausdehnung eines einzelnen Planspiegels konzentrieren, beschrieben. Ein Linienprofil ist damit nicht erreichbar, da die einzelnen Spiegel keine fokussierende Wirkung haben. Die Fertigung einer solchen Anordnung ist kompliziert.

Facettenspiegel sind auch aus Ream, S. L, "A Convex Beam Integrator", Laser Focus, Nov. 1979, pp. 68-71, US 4 518 232 und JP 59-151 101 A, letzterer mit sphärischen Facetten, bekannt.

Aufgabe der Erfindung ist es, mit nur einer optischen Abbildung einem Lichtbündel mit beliebigem Strahlquerschnitt einen linienförmigen bis rechteckigen Strahlquerschnitt mit bestimmter Intensitätsverteilung zu geben, wobei die Auswirkungen der bei längeren Wellenlängen auftretenden Interferenzen möglichst gering gehalten werden. Die exakte Herstellung soll durch die Eignung für inhärent genaue Fertigungsmethoden erleichtert sein.

Diese Aufgabe wird durch einen Spiegel gemäß dem Anspruch 1 gelöst.

Bis auf den Versatz der Segmente und Symmetrieachsen entsprechen erfindungsgemäße Spiegel im Aufbau den in DE 39 12 237 A angegebenen.

Durch den seitwärtigen Versatz der Segmente werden die Kohärenzbedingungen für die Lichtbeiträge von den einzelnen Segmenten soweit verändert, daß Interferenzeffekte unterdrückt werden.

Werden die Segmente gemäß Anspruch 1 mit ihren Rotationsachsen parallel seitwärts stufenweise gegeneinander versetzt, dann lassen sich Interferenzen praktisch völlig vermeiden. Bei weiter vergrößertem seitwärtigem Versatz wird der Überlagerungsbereich rechteckig und gemäß Anspruch 1 kann senkrecht zu den Rotationsachsen, im Fall der Anwendung bei der Laserbearbeitung in Vorschubrichtung, ein bestimmtes Intensitätsprofil erzeugt werden durch die Vorgabe des Versatzes der Segmente zu je bestimmten Zonen des Lichtbündels mit unterschiedlicher Gesamtintensität.

Durch den axialen stufenförmigen Versatz nach Anspruch 2 erreicht man zusätzlich, daß die von benachbarten Segmenten reflektierten Strahlen einen größeren Winkel miteinander einschließen. Dadurch werden entstehende axiale Interferenzstrukturen feiner strukturiert und sind dadurch für die erwähnten Anwendungsfälle weniger störend.

Ansprüche 4 bis 8 betreffen weitere vorteilhafte Ausführungsformen.

Anspruch 9 betrifft ein Verfahren zur Oberflächenbehandlung mit Laser und Spiegel nach einem der Ansprüche 1 bis 8.

Die in der obengenannten DE 39 12 237 A beschriebenen Eigenschaften und Vorteile sind auch dem erfindungsgemäßen Spiegel zu eigen.

Die Erfindung wird nachstehend in beispielhafter Weise anhand der Figuren näher erläutert, wobei weitere wesentliche Merkmale sowie dem besseren Verständnis dienende Erläuterungen und Ausgestaltungsmöglichkeiten des Erfindungsgedankens beschrieben sind.

Dabei zeigt
- Figur: 1 ein perspektivisches Schema eines erfindungsgemäßen Spiegels mit seitlichem stufenförmigem Versatz der Segmente;

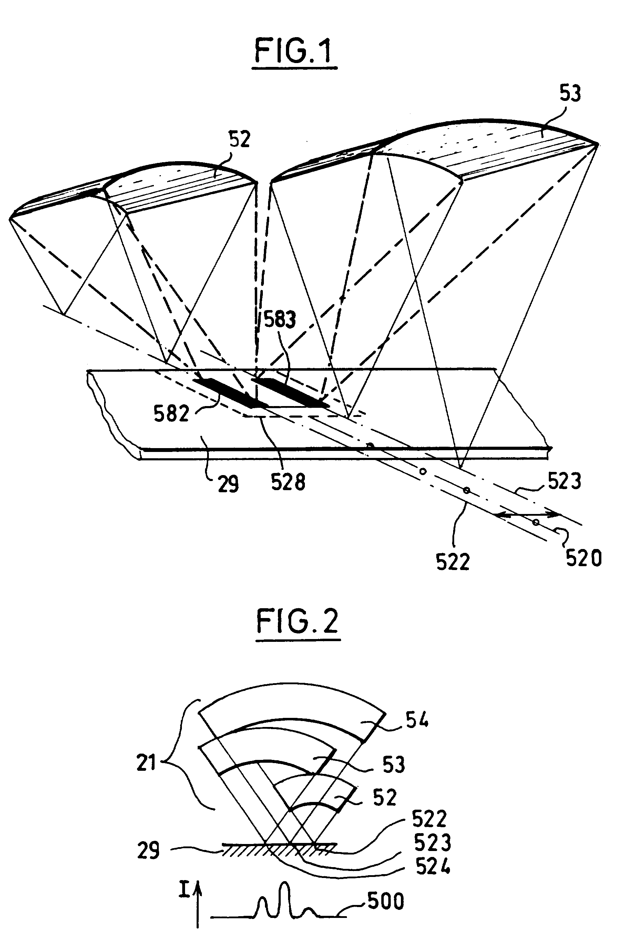

- Figur 2: eine schematische vereinfachte Ansicht eines erfindungsgemäßen Spiegels mit seitlichem stufenförmigem Versatz der Segmente einschließlich zugehörigem Intensitätsprofil.

Figur 1 zeigt eine perspektivische Sicht, Figur 2 eine Frontalansicht zusammen mit einem resultierenden Intensitätsprofil (500) des erfindungsgemäßen Spiegels (21), bei dem die Segmente (52, 53, 54) mit ihren Rotationsachsen (522, 523, 524) parallel seitwärts stufenweise gegeneinander versetzt sind.

Segmente (52, 53, 54) von Rotationskörpern, wie in den voranstehenden Figuren, sind nun mit ihren Rotationsachsen (522, 523, 524) gegenüber einer mittleren Achse (520) seitwärts parallel versetzt. Die Linienfoci (582, 583) der einzelnen Segmente (52, 53) liegen auf den jeweiligen Rotationsachsen (522, 523) in einem rechteckigen Bereich (528) auf dem Objekt (29). Typisch ist ein Versatz von 0,1 mm bis 0,3 mm. Zur Unterdrückung von Störinterferenzen genügt ein Versatz um etwa die Breite der einzelnen Linienfoci der Segmente (52, 53, 54). Bei größerem Versatz kann man einen rechteckigen Bereich mit gezieltem Intensitätsprofil ausleuchten. Dies geschieht dadurch, daß man den nebeneinanderliegenden einzelnen Linien unterschiedliche Intensitäten gibt. Die Variation der Intensitäten kann über die Segmentbreite erfolgen oder einfach durch Ausnutzung der Tatsache, daß die Segmente (52, 53, 54) je nach dem Profil des Lichtbündels (27) unterschiedlich ausgeleuchtet werden. Dabei hat man gewisse Freiheiten deshalb, weil benachbarte Linien (582, 583) nicht notwendig von benachbarten Segmenten (52, 53, 54) erzeugt werden müssen. Der Versatz für jedes Segment (52, 53, 54) kann unabhängig gewählt werden, wie in Fig. 6 dargestellt.

Die Grenzen ergeben sich dadurch, daß die Zahl der Segmente (52, 53, 54) und damit die Zahl der nebeneinanderliegenden Linien (582, 583) klein gehalten werden muß, damit nicht der Intensitätsabfall an den Enden der Linien (582, 583) durch Beugungserscheinungen zu stark verflacht wird.

In Figur 2 sind die Segmente (52, 53, 54) zur Verdeutlichung mit gleichen Sektorenwinkeln eingezeichnet. Natürlich ist aber wie in den vorangegangenen Beispielen die Größe der Sektoren (52, 53, 54) so zu wählen, daß das Lichtbündel (27) voll erfaßt wird und keine Lücken entstehen.

Die Herstellung solcher Spiegel (21) mit seitlichem Versatz der Rotationsachsen wird realisiert durch Versetzen des Spiegelkörpers in der Halterung der Drehmaschine nach dem Fertigdrehen jedes einzelnen Segments (52, 53, 54).

Bei Spiegeln mit gekrümmten verspiegelten Segmenten hat man den Vorteil, daß man die Zahl (und damit die Länge) der Segmente einerseits und die Länge des linienförmigen Bereichs andererseits unabhängig voneinander wählen kann.

Entsprechend der gewünschten Anwendungen und den gestellten Anforderungen an die Intensitätsverteilung haben die Segmente in Richtung der Rotationsachse bevorzugt einen kreis-, parabel- oder elliptischen Querschnitt, so daß Torus-, Kugel-, Paraboloid- oder Ellipsoid-Flächen als spiegelnde Segmente entstehen. Für spezielle Intensitätsverteilung in Richtung der Rotationsachsen können auch abweichende Formen zweckmäßig sein.

Bei entsprechender Berechnung des Spiegels können dabei die Einfallswinkel des Laserstrahlbündels sowie dessen geometrische Eigenschaften in einem weiten Bereich variieren.

Bevorzugt ist das Lichtbündel (57) parallel oder achsparallel zur mittleren Rotationsachse (522) oder divergent mit einem Quellpunkt auf der mittleren Rotationsachse (520), wird also durch die Segmente (52-54) des Spiegels (21) auf den linienhaften Arbeitsbereich (582) abgebildet, wobei an den hinteren Kanten der Segmente (52-54) jeweils ein Sprung der Abbildung vom Ende des Arbeitsbereiches (582) an dessen Anfang erfolgt. Der Arbeitsbereich (582) ist dabei ein Intervall auf der Rotationsachse (520). Neigungen und Längen der kegeligen Segmente (52-54) werden so gewählt, daß die zugehörigen Fokallinien auf den Rotationsachsen (522, 523, 524) gleich lang sind.

## Patentansprüche

1. Spiegel (21) zur Veränderung des Intensitätsprofils (500) eines Lichtbündels, dessen reflektierende Fläche aus mehreren Segmenten (52, 53, 54) von rotationssymmetrischen Flächen besteht,
deren Rotationsachsen (522, 523, 524) gegeneinander versetzt und im wesentlichen zueinander parallel in einer Ebene (29) angeordnet sind, wobei
die Segmente (52, 53, 54) in Richtung der Rotationsachsen (522, 523, 524) aneinandergereiht sind, und wobei
die Größe und Form der Segmente so gewählt sind, daß ein aus einer vorbestimmten Richtung auf die Spiegelfläche auftreffendes Lichtbündel zonenweise von den jeweiligen Segmenten einmal reflektiert und in einen rechteckigen Bereich (528) der Ebene (29) der Rotationsachsen (50) gerichtet wird, daß alle Zonen des Lichtbündels in dieser Ebene nebeneinander in einer Richtung abgebildet werden, die im wesentlichen senkrecht zu den Rotationsachsen liegt.

2. Spiegel nach Anspruch 1, dadurch gekennzeichnet, daß die Segmente (52, 53, 54) zusätzlich in Richtung der Rotationsachsen, stufenweise gegeneinander versetzt sind.

3. Spiegel nach einem der Ansprüche 1-2, dadurch gekennzeichnet, daß alle Segmente (52-54) zu einem kompakten Bauteil zusammengefügt sind.

4. Spiegel nach einem der Ansprüche 1-3, dadurch gekennzeichnet, daß der Spiegel (21) einstückig gefertigt ist.

5. Spiegel nach einem der Ansprüche 1-4, dadurch gekennzeichnet, daß die Segmente (52, 53, 54) alle verschieden sind.

6. Spiegel nach einem der Ansprüche 1-5, dadurch gekennzeichnet, daß die Segmente (52, 53, 54) Segmente von Kegel, Kugel, Torus, Ellipsoid oder Paraboloid sind.

7. Spiegel nach einem der Ansprüche 1-6, gekennzeichnet durch die Herstellung durch Diamantdrehen.

8. Verfahren zur Oberflächenbehandlung mit streifenweiser Bestrahlung durch einen Laser, dadurch gekennzeichnet, daß ein Spiegel nach einem der Ansprüche 1-7 verwendet wird.

## Claims

1. Mirror (21) for changing the intensity profile (500) of a light beam, whose reflecting face is composed of a plurality of segments (52, 53, 54) of rotationally symmetric surfaces,
- whose axes of rotation (522, 523, 524) are shifted relative to each other and which are arranged in a plane (29) essentially parallel to each other, where
- the segments (52, 53, 54) are arranged in a series in the direction of the axes of rotation (522, 523, 524), and where
- the size and the form of the segments are selected in such a manner that zonal parts of a light beam reaching the reflecting face from a predetermined direction are once reflected by respective segments and are directed into a rectangular part (528) of the plane (29) of the axes of rotation in such a manner, that all zonal parts of the light beam are imaged in this plane arranged side by side in a direction which is essentially orthogonal to the axes of rotation.

2. Mirror according to claim 1, characterized in that additionally the segments (52, 53, 54) are displaced one from the other stepwise in the direction of the axes of rotation.

3. Mirror according to one of the claims 1-2, characterized in that all segments (52-54) are composed to give a compact unit.

4. Mirror according to one of the claims 1-3, characterized in that the mirror (21) is made from one piece.

5. Mirror according to one of the claims 1-4, characterized in that all segments (52, 53, 54) are different from each other.

6. Mirror according to one of the claims 1-5, characterized in that the segments (52, 53, 54) are segments of conus, sphere, torus, ellipsoid or paraboloid.

7. Mirror according to one of the claims 1-6, characterized by its production by way of diamond turning.

8. Method of surface treatment with stripwise irradiation by a laser, characterized in that a mirror according to one of the claims 1-7 is used.

## Revendications

1. Miroir (21) destiné à modifier le profil d'intensité (500) d'un faisceau lumineux et doté d'une surface réfléchissante composé de plusieurs segments (52, 53, 54) présentant des surfaces à symétrie de révolution
dont les axes de révolution (522, 523, 524) sont disposés dans un plan (29) avec un décalage sensiblement parallèle l'un par rapport à l'autre,
les segments (52, 53, 54) étant enchaînés le long des axes de révolution (522, 523, 524) et
la taille et la forme des segments étant choisies de manière à ce qu'un faisceau lumineux incident éclairant la surface réfléchissante dans une direction prédéterminée soit réfléchi par zones par les segments respectifs, en réflexion unique, et orienté sur une tranche rectangulaire (528) du plan (29) des axes de révolution, de façon à ce que toutes les zones du faisceau lumineux soient reproduites dans ce plan l'une à côté de l'autre, dans un sens sensiblement perpendiculaire aux axes de révolution.

2. Miroir selon la revendication 1, caractérisé en ce que les segments (52, 53, 54) sont en plus décalés les uns par rapport à l'autre par intervalles dans le sens des axes de révolution.

3. Miroir selon la revendication 1 ou 2, caractérisé en ce que tous les segments sont réunis dans un composant compact.

4. Miroir (21) selon l'une quelconque des revendications 1 à 3, caractérisé en ce qu'il est constitué par un composant unique.

5. Miroir selon l'une quelconque des revendications 1 à 4, caractérisé en ce que les segments (52, 53, 54) sont tous différents.

6. Miroir selon l'une quelconque des revendications 1 à 5, caractérisé en ce que les segments (52, 53, 54) sont des segments d'un cône, d'une sphère, d'un tore, d'un ellipsoïde ou d'un paraboloïde.

7. Miroir selon l'une quelconque des revendications 1 à 6, caractérisé en ce que la fabrication se fait par tournage aux outils diamantés.

8. Procédé de traitement de surface basé sur une irradiation au laser par bandes, caractérisé en ce que l'on met en oeuvre un miroir conforme à l'une des revendications 1 à 7.
